# EUROPÄISCHE PATENTSCHRIFT

(11) **EP 2 607 111 B1**
(45) Veröffentlichungstag und Bekanntmachung des Hinweises auf die Patenterteilung: **21.10.2015**
(21) Anmeldenummer: 12008519.6
(22) Anmeldetag: 21.12.2012
(51) Int. Cl.: B60D 1/48

(54) **Trägersystem für eine Anhängekupplung eines Kraftfahrzeugs**
Carrier system for a trailer coupling of a motor vehicle
Système de support pour une remorque de véhicule automobile

(30) Priorität: 24.12.2011 DE 102011122468
(43) Veröffentlichungstag der Anmeldung: 26.06.2013
(73) Patentinhaber: WESTFALIA - Automotive GmbH, 33378 Rheda-Wiedenbrück (DE)
(72) Erfinder: Burdick, Sascha, 34414 Warburg (DE); Dinius, Waldemar, 33098 Paderborn (DE); Weltz, Jörn-René, 33758 Schloss Holte-Stukenbrock (DE); Nowosselzew, Eugen, 33098 Paderborn (DE)
(74) Vertreter: Patentanwälte Bregenzer und Reule Partnerschaftsgesellschaft mbB

(56) Entgegenhaltungen:
- EP-A1- 2 095 978
- US-A1- 2004 239 076
- US-A1- 2005 179 232

## Beschreibung

Die Erfindung bezieht sich auf ein Trägersystem für eine Anhängekupplung eines Kraftfahrzeugs, insbesondere Personenkraftwagens, nach dem Oberbegriff des Patentanspruchs 1.

Die Erfindung betrifft ein Trägersystem für eine Anhängekupplung eines Kraftfahrzeugs, insbesondere Personenkraftwagens, das einen als Rohrabschnitt dargestellten Querträger umfasst, welcher Querträger insbesondere in einer Mittellängsebene des Personenkraftwagens ein Verbindungssystem und an Endbereichen mit Längsträgern versehen ist, über die die in einem Heck des Personenkraftwagens angeordnete oder anordenbare Anhängevorrichtung an Aufbauabschnitten in Lage gehalten wird.

Es ist eine Trägeranordnung für eine Anhängekupplung bekannt, DE 20 2009 006 345 U1, die mit einem Fahrzeug verbindbar ist. Diese Trägeranordnung mit einem Querträger und einem Halter zur Montage am Fahrzeug ist als Leichtbaukonstruktion ausgebildet. Der Querträger ist mit zwei im Wesentlichen gleichgerichteten und zumindest bereichsweise seitlich distanzierten Tragplatten versehen, die mit ihren Hauptebenen vertikal ausgerichtet sind. Die in Fahrzeugquerrichtung verlaufenden Tragplatten sind an Endbereichen an Haltern befestigt, die nach Art von Eckverbindungen gestaltet und mit längsträgerartigen Abschnitten ausgestattet sind. Über diese Abschnitte werden die die Tragplatten aufnehmenden Eckverbindungen In Lage gehalten.

Aus der US 2011/0109063 A1 geht eine Anhängekupplung für ein Kraftfahrzeug hervor, die einen Querträger mit seitlichen Längsträgern aufweist. Der Querträger besitzt einen rohrförmigen Querschnitt und kann aus Stahl, Aluminium, CFK oder anderen Verbundwerkstoffen bestehen. In einer Mittellängsebene des Querträgers ist ein Aufnahmerohr für einen Kupplungsarm vorgesehen. Die Längsträger umfassen aufrechte und horizontale Konsolenabschnitte, welche Längsträger Winkelelemente darstellen. In die aufrechten Konsolenabschnitte sind Aufnahmeöffnungen eingearbeitet, deren Größe dem Querschnitt des Querträgers entspricht. An gegenüberliegenden Seiten der Aufnahmeöffnungen sind nasenartige Erweiterungen vorgesehen, die in entsprechende Ausnehmungen des Querträgers eingreifen. Darüber hinaus sind die aufrechten Konsolenabschnitte und der Querträger durch Umfangsschweißungen miteinander verbunden.

Gemäß der US 2005/0236809 A1 ist im Heck eines Personenkraftwagens eine als Querträger dargestellte Stoßfängerverstärkung vorgesehen. Der Querträger kann ein extrudiertes Aluminiumbauteil sein, und zwar mit rohrförmigem Querschnitt, wobei gegenüberliegende Wände des Querschnitts über eine Stützwand verbunden sind. In einer Mittellängsebene des Querträgers ist eine Haltevorrichtung für einen Abschlepphaken angeordnet. Die Haltevorrichtung ragt mit einem Eingriffelement in eine korrespondierende Aufnahme in dem Querträger formschlüssig ein, und besagte Haltevorrichtung ist unter Vermittlung von Schrauben am Querträger befestigt.

Die DE 90 06 077 U1 gibt eine wechselbare Anhängekupplung für Zugfahrzeuge wieder, die aus zwei lösbaren Kupplungsteilen besteht. Das eine Kupplungsteil ist fest am Zugfahrzeug angebracht und das andere Kupplungsteil trägt einen Kupplungskopf. Die beiden Kupplungsteile sind über eine keilförmige Nut- und Federverbindung -Schwalbenschwanz- formschlüssig miteinander verbunden. Das bewegliche Kupplungsteil mit dem Kupplungskopf wird von oben nach unten in das feste Kupplungsteil eingeführt und mit einer Vorrichtung verriegelt.

Aus der EP 2 095 978 A1 ist ebenfalls der Oberbegriff des Anspruchs 1 bekannt.

Es ist Aufgabe der Erfindung ein Trägersystem für eine Anhängekupplung oder einen Hecklastenträger eines Personenkraftwagens zu konzipieren, das neben Beiträgen zum Leichtbau von Anhängekupplungen auch Maßnahmen zu Fertigungsvereinfachung derartiger Anhängekupplungen bietet.

Erfindungsgemäß wird diese Aufgabe durch die Merkmale des Patentanspruchs 1 gelöst. Weitere, die Erfindung ausgestaltende Merkmale sind in den Unteransprüchen enthalten.

Bei dem eingangs genannten Trägersystem ist z. B. vorgesehen, dass der Querträger benachbart den Endbereichen mit den Längsträgern unter Vermittlung von in Aufnahmen eingeführten und durch einen oder mehrere Verformvorgänge in Endlagen verbrachten Biegeelementen verbunden ist.

Die mit der Erfindung hauptsächlich erzielten Vorteile sind darin zu sehen, dass das Trägersystem der Anhängekupplung, umfassend einen Querträger und Längsträger, die über besonders gestaltete Aufnahmen und Biegelemente miteinander verbunden sind eine hoch entwickelte Konstruktion einer Anhängekupplung für Personenkraftwagen ergibt. Diese Anhängekupplung lässt sich leicht herstellen, und sie eignet sich zur Realisierung einer Leichtbauausführung.

Hervorzuheben in diesem Zusammenhang sind auch der mit üblichen Fertigungsmethoden produzierbare z.B. vorzugsweise als Strangpressprofil dargestellte Querträger und die zweckmäßigerweise einfachen aus hochfestem Flachmaterial bestehenden Längsträger.

Das Strangpressprofil kann beispielsweise einen rechteckigen oder quadratischen Querschnitt haben. Es ist aber auch möglich, dass das Strangpressprofil beispielsweise einen hexagonalen oder runden Querschnitt hat.

Die zweckmäßigen Aufnahmen für die Biegelemente an der oberen Wand und der unteren Wand des Querschnitts stellen ein gezieltes Zusammenwirken mit den Biegeelementen sicher. Dabei nehmen die Biegelemente nach dem Einführen in die Aufnahmen aufgrund der ausgeklügelten und vorteilhaften Rampen in den Aufnahmen eine Vorposition ein, aus der der Verformungsvorgang der Biegeabschnitte der Biegelemente musterhaft durchführbar ist.

Schließlich setzt die vorteilhafte Anbringung des Verbindungssystems am Querträger unter Vermittlung des Aufnahmeelements für den Kugelhals und der Schwalbenschwanzverbindung zwischen Kugelhals und Aufnahmeelement konstruktive Maßstäbe.

An einem jeweiligen Endbereich haben der Querträger und ein jeweiliger Längsträger vorzugsweise einander zugeordnete in Fahrzeuglängsrichtung vordere und hintere Aufnahmen und vordere und hintere Biegeelemente zum Eingriff in die Aufnahmen.

Eine Vorrichtung oder Anhängekupplung gemäß der Erfindung weist beispielsweise ein Verbindungssystem oder Zugsystem mit einem steckbaren oder in sonstiger Weise lösbaren Kupplungsarm zum Ankuppeln eines Anhängers auf. Das Verbindungssystem kann aber auch beispielsweise einen beweglich am Querträger mittels einer Lagereinrichtung gelagerten Kupplungsarm umfassen. Beispielsweise ist der Kupplungsarm mittels eines Schwenklagers und/oder eines Schiebelagers beweglich an dem Querträger gelagert, so dass er zwischen einer Arbeitsstellung, bei der ein Kuppelelement zum Ankuppeln eines Anhängers nach hinten vor das Heck des Fahrzeugs vorsteht, und einer Ruhestellung beweglich ist, bei der der Kupplungsarm und/oder das Kuppelelement näher am Heck des Fahrzeugs angeordnet sind, beispielsweise unter oder hinter einen Stoßfänger des Fahrzeugs bewegt sind. Die Aufnahme für das Verbindungssystem oder Zugsystem umfasst dann beispielsweise eine Aufnahme für die Lagereinrichtung.

Das Verbindungssystem für eine Anhängekupplung ist vorzugsweise in der Mittellängsebene des Kraftfahrzeugs vorgesehen. Bevorzugt befindet sich die Anhängekupplung bzw. deren Verbindungssystem quermittig am Querträger. Dort kann sich selbstverständlich auch eine Aufnahme oder sonstige Halterung für einen Hecklastenträger befinden.

Beispielsweise können eine oder mehrere rohrförmige Aufnahmen oder Hülsen vorgesehen sein, in die entsprechende Steckarme eines Hecklastenträgers einsteckbar sind. Derartige Aufnahmen oder Hülsen sind zweckmäßigerweise nicht genau in der Quermitte des Querträgers, sondern zwischen der Quermitte und den Längsträgern angeordnet. Aber auch eine quermittige Halterung für einen Hecklastenträger, zum Beispiel die vorgenannte Aufnahmehülse, ist ohne weiteres möglich.

Die Formulierungen "aufrecht stehen" oder "waagerecht liegen" sollen vorzugsweise so verstanden werden, dass sie den montierten Zustand des Grundträgers definieren, also beispielsweise einen im am Kraftfahrzeug montierten Zustand im Wesentlichen vertikalen Verlauf oder im wesentlichen horizontalen Verlauf definieren.

In der Zeichnung wird ein Ausführungsbeispiel der Erfindung gezeigt, das nachstehend näher erläutert wird.

Es zeigen:

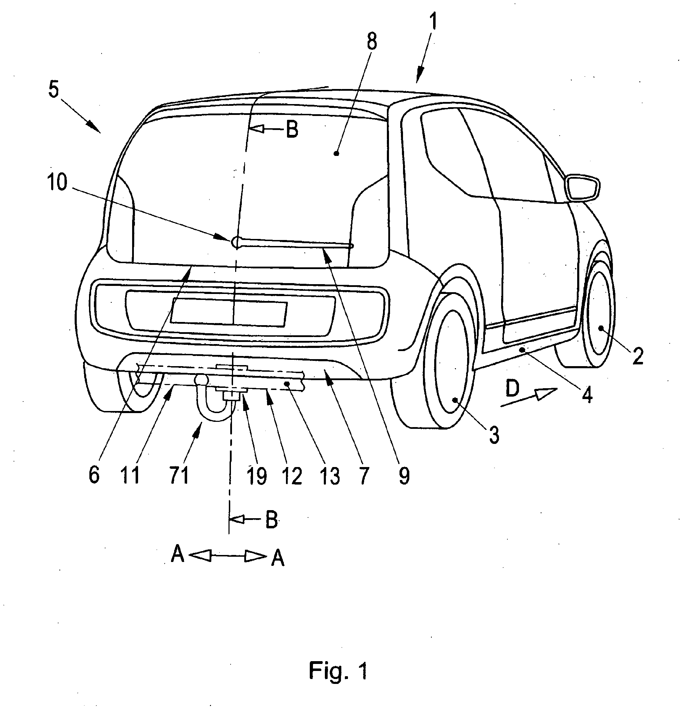

- Figur 1: eine Schrägansicht von hinten rechts auf einen Personenkraftwagen mit einer Anhängekupplung,

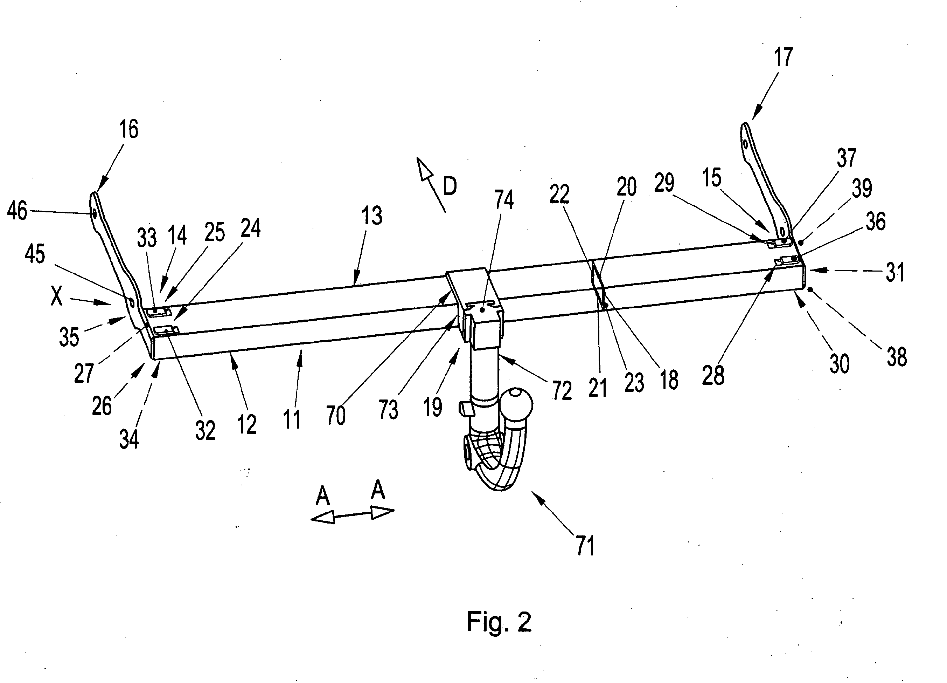

- Figur 2: eine Schrägansicht von hinten oben links auf die nicht am Personenkraftwagen befestigte Anhängekupplung gemäß Fig. 1 in größerem Maßstab,
- Figur 3: eine Einzelheit X der Fig. 2 mit einer Verbindung zwischen Querträger und einem Längsträger der Anhängekupplung in größerem Maßstab, jedoch in einer anderen Schrägansicht.,

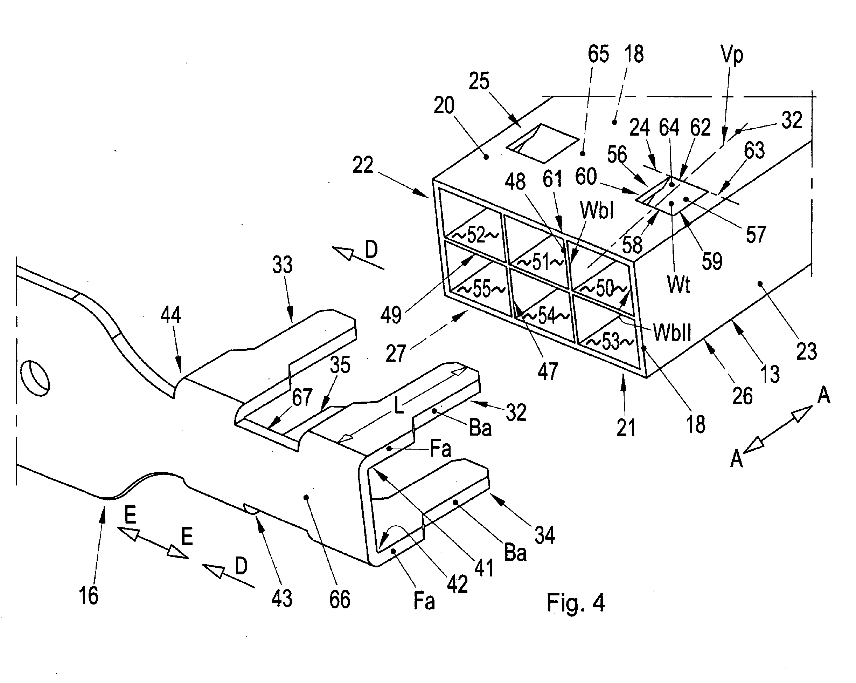

- Figur 4: eine Ansicht ähnlich Fig. 3, jedoch der Querträger und der Längsträger als Explosionsdarstellung.

Von einem Personenkraftwagen 1 dargestellt ist ein von Rädern 2 und 3 getragener Aufbau 4, der in einem Heck 5 eine mit einer unteren in Fahrzeugquerrichtung A-A verlaufenden Begrenzungskante 6 nahe an einen Stoßfänger 7 herangeführte Glasscheibe 8 umfasst. Die Glasscheibe 8 erstreckt sich über eine wesentliche Breite des Personenkraftwagens 1 und ist mit einem Scheibenwischerarm 9 versehen, dessen Schwenkachse 10 auf einer Mittellängsebene B-B des besagten Personenkraftwagens liegt.

Benachbart der Unterkante des Stoßfängers 7 verläuft in Fahrzeugquerrichtung A-A eine Anhängevorrichtung 11, die einen als Rohrabschnitt 12 ausgebildeten Querträger 13, dargestellt bspw. als Strangpressprofil, aufweist. Der Querträger 13 ist an Endbereichen 14 und 15 mit Längsträgern 16 und 17 versehen. Der aus Metall -Leichtmetall, Stahl- Verbundwerkstoff oder dgl. bestehende Rohrabschnitt 12 umfasst einen viereckigen Querschnitt, der im Ausführungsbeispiel als rechteckiger Querschnitt 18 ausgeführt ist. In der Mittelängsebene B-B ist am Querträger 13 ein Verbindungssystem 19 angebracht, das mit einer Tragvorrichtung z.B. für Fahrräder oder einem Anhänger -letztere sind nicht abgebildet- koppelbar ist. Und der Querträger 13 kann in seiner Längsrichtung gesehen gerade oder gebogen sein.

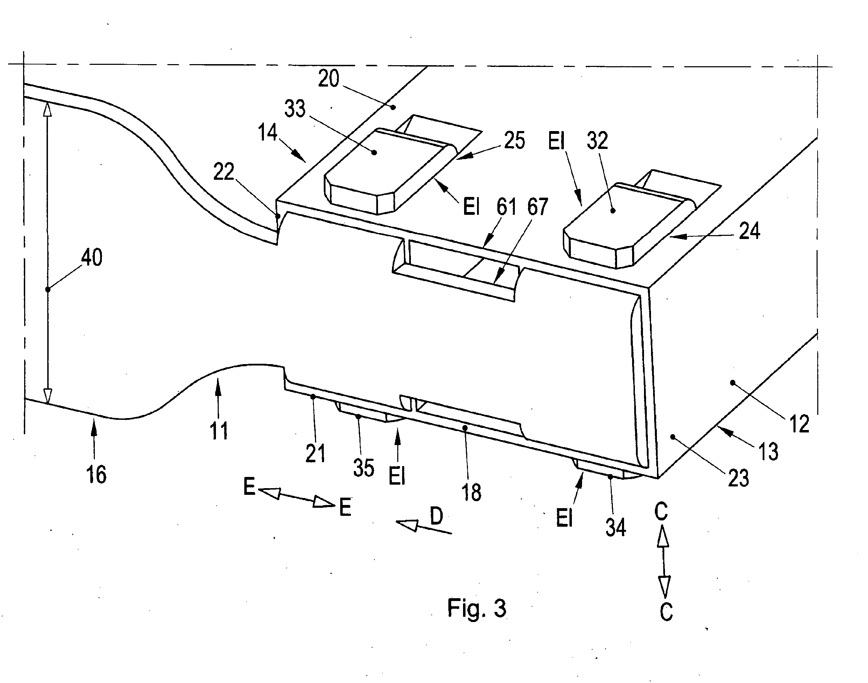

Der Querschnitt 18 besitzt längere, -in Fahrzeughöhenrichtung C-C -Fig.3- betrachtet- obere und untere horizontale Wände 20 bzw. 21 sowie -in Fahrtrichtung D betrachtet- kürzere vordere und hintere zur Bildung des Querschnitts 18 beitragende aufrechte bzw. senkrechte Wände 22 bzw. 23. Die oberen und unteren Wände 20 und 21 des Querschnitts 18 weisen an den Endbereichen 14 und 15 Aufnahmen 24 und 25 sowie 26 und 27 bzw. 28 und 29 sowie 30 und 31 auf. In den Aufnahmen 24 und 25 sowie 26 und 27 bzw. 28 und 29 sowie 30 und 31 sind Biegelemente 32 und 33 sowie 34 und 35 bzw. 36 und 37 sowie 38 und 39 wirksam, d.h. die Biegelemente 32 und 33 sowie 34 und 35 bzw. 36 und 37 sowie 38 und 39 halten mittels der Aufnahmen 24 und 25 sowie 26 und 27 bzw. 28 und 29 sowie 30 und 31 die Längsträger 16 und 17 und den Querträger 13 zusammen. Jeder Längsträger, z.B. der Längsträger 16, ist aus hochfestem Flachmaterial wie Metall, Kunststoff, Verbundwerkstoff oder dgl. gefertigt und an nicht gezeigten Rahmenabschnitten des Aufbaus 4 befestigt. Dabei steht eine längere Querschnittseite 40 des schwertartigen Längsträgers 16 im Wesentlichen senkrecht und die Biegeelemente 32 und 33 sowie 34 und 35 werden durch Abwinkelungen 41 und 42 bzw. 43 und 44 des Längsträgers 16 gebildet, wobei besagte Biegelemente 32 und 33 sowie 34 und 35 aus einem Stück mit dem Längsträger 16 hergestellt sind und quer zur Fahrzeuglängsrichtung E-E -Fig. 3- verlaufen. Denkbar ist aber auch, den Längsträger 16 und die Biegeelemente 32 und 33 sowie 34 und 35 getrennt voneinander herzustellen und anschließend zusammenzubauen. Zur Halterung des Längsträgers 16 ist dieser mit Durchgangsöffnungen 45 und 46 für nicht dargestellte Befestigungsschrauben versehen.

Der Querträger 13 umfasst zwischen den horizontalen Wänden 20 und 21 und aufrechte Wänden 22 und 23 Stützwände 47, 48 und 49 -Fig. 3-. Die Stützwände 47, 48 und 49 bilden zusammen mit den horizontalen Wänden 20 und 21 und den aufrechten Wänden 22 und 23 Kammern 50, 51 und 52 sowie 53, 54 und 55.

Die Aufnahmen 24 und 25 sowie 26 und 27 für die Biegeelemente 32 und 33 bzw. 35 und 34 in der oberen und der unteren Wand 20, 21 des Querschnitts 18 für die zugehörige Biegeelemente 32 und 33 sowie 34 und 35 werden jeweils durch einen Ausschnitt 56 z.B. in der oberen Wand 20 gebildet. Dieser Ausschnitt 56 weist eine viereckige Form auf, und ein Wandteil Wt des Ausschnitts 56 ist nur an drei Seiten 58, 59 und 60 von der von der Wand 20 getrennt. Eine vierte entfernt von einem Stützende 61 des Querträgers 13 liegende Seite 62 des Ausschnitts 56 ist als Biegekante 63 ausgeführt, über die ein verbleibender Wandteil Wt der oberen Wand 20 als Rampe 64 in den Innenraum 65 des Querträgers 13 abgestellt wird. Mittels dieser Rampe 64 wird das entsprechende Biegeelement 32 in eine Vorposition Vp verbracht.

Im Ausführungsbeispiel sind an jedem Endbereich bspw. 14 des Querträgers 13 an der oberen Wand 20 und der unteren Wand 21 jeweils zwei in Fahrzeuglängsrichtung E-E beabstandete und in Fahrzeugquerrichtung A-A ausgerichtete Biegeelemente 32 und 33 bzw. 34 und 35 vorgesehen. Die Biegelemente 32 und 33 bzw. 34 und 35 sind als die Abwinkelungen 41 und 42 bzw. 43 und 44 mit einem aufrechten als Wandabschnitt 66 des Längsträgers 16 ausgebildeten Anschlag 67 verbunden. Der Anschlag 67 bildet mit dem Längsträger 16 eine Einheit, und er liegt an dem Stützende 61 des Querträgers 13 an.

Jedes zungenartige Biegelement, z.B. das Biegelement 32, ist mit einem flachem Querschnitt versehen und besitzt in seiner Länge L betrachtet einen dem Anschlag 67 benachbarten Führungsabschnitt Fa, der mit aufrechten Wandbereichen WbI und WbII in der Kammer 50 des Querträgers 18 zusammenarbeitet. An den Führungsabschnitt Fa schließt ein Biegeabschnitt Ba an, der in die Aufnahme 24 einführ- und bei der Montage mittels der Rampe 64 vorpositionierbar ist.

Zur Herstellung der Anhängekupplung 11 eignen sich folgende Verfahrenschritte:
- die Längsträger 16 und 17 werden getrennt voneinander hergestellt,
- der jeweilige vorgefertigte Längsträger bspw. 16 wird mit den Biegelementen 32 und 33 bzw. 34 und 35 in die korrespondierenden Aufnahmen 24 und 25 bzw. 26 und 27 eingeführt,
- die Führungsabschnitte Fa richten die Biegeabschnitte Ba in der Weise aus, das sie durch die Aufnahmen 24 und 25 bzw. 26 und 27 und bewegt und mittels den in den Aufnahmen 24 und 25 bzw. 26 und 27 vorgesehenen Rampen 64 in eine Vorposition Vp verbracht werden,
- die Biegeabschnitte Ba werden vollständig umgebogen, dergestalt, dass sie auf der oberen Wand 20 und der unteren Wand 21 des Querträgers 13 mit Berührungskontakt aufliegen und Endlagen El einnehmen -Fig. 3-.

Das Verbindungssystem 19 umfasst ein in der Mittellängsebene B-B am Querträger 13 befestigtes Aufnahmeelement 70 das mit einem bspw. U-förmigen Querschnitt den Querträger 13 umgreift und z.B. durch Kleben befestigt ist. Mit dem Aufnahmeelement 70 ist ein Kugelhals 71 verbindbar. Hierzu ist zwischen einem aufrechten Tragbolzen 72 des Kugelhalses 71 und einem Schenkel 73 des Aufnahmeelements 70 eine Schwalbenschwanzverbindung 74 wirksam.

## Patentansprüche

1. Trägersystem für eine Anhängekupplung und/oder einen Hecklastenträger eines Kraftfahrzeugs, insbesondere eines Personenkraftwagens, wobei das Trägersystem einen als Rohrabschnitt dargestellten Querträger umfasst, welcher Querträger ein Verbindungssystem einer Anhängekupplung oder eines Hecklastenträgers aufweist und an Endbereichen mit zur Montage an Aufbauabschnitten an einem Heck des Kraftfahrzeugs vorgesehenen Längsträgern verbunden ist, **dadurch gekennzeichnet, dass** der Querträger (13) benachbart den Endbereichen (14 und 15) mit den Längsträgern unter Vermittlung von in Aufnahmen (24 und 25 sowie 2 6 und 2 7 bzw. 2 8 und 2 9 sowie 3 0 und 31) eingeführten und durch einen oder mehrere Verformvorgänge in Endlagen (E1) verbrachten Biegeelementen (32 und 33 sowie 34 und 35 bzw. 36 und 37 sowie 38 und 39) verbunden ist.

2. Trägersystem nach Anspruch 1, **dadurch gekennzeichnet, dass** zumindest jeder Endbereich (z.B. 14) des Querträgers (13) einen viereckigen, vorzugsweise rechteckigen Querschnitt (18) aufweist, dergestalt, dass in Fahrzeughöhenrichtung (C-C) betrachtet längere obere und untere Wände (20 bzw. 21) des rechteckigen Querschnitts (18) horizontal und in Fahrzeuglängsrichtung (E-E) ausgerichtet sind, wogegen in Fahrtrichtung (D) gesehen kürzere aufrechte vordere und hintere Wände (22 bzw. 23) zur Bildung des Querschnitts (18) beitragen.

3. Trägersystem nach Anspruch 1 oder 2, **dadurch gekennzeichnet, dass** jeder Längsträger (z.B. 16) aus hochfestem Flachmaterial, vorzugsweise Metall, Verbundwerkstoff oder dgl., hergestellt ist, wobei eine längere Querschnittsseite (40) des Längsträgers (16) im Wesentlichen aufrecht steht.

4. Trägersystem nach einem der vorhergehenden Ansprüche, **dadurch gekennzeichnet, dass** der Querträger (13) durch ein Strangpressprofil mit insbesondere rechteckigem Querschnitt gebildet ist.

5. Trägersystem nach einem der vorhergehenden Ansprüche, **dadurch gekennzeichnet, dass** der Querträger (13) zwischen den horizontalen oberen und unteren Wänden (20 bzw. 21) sowie den aufrechten vorderen und hinteren Wänden (22 bzw. 23) Stützwände (47, 48 und 49) aufweist, die zusammen mit den horizontalen und aufrechten Wänden (20 und 21 bzw. 22 und 23) Kammern (50, 51 und 52 bzw. 53, 54 und 55) bilden.

6. Trägersystem nach einem der vorhergehenden Ansprüche, **dadurch gekennzeichnet, dass** die Aufnahmen (24 und 25 sowie 26 und 27 bzw. 28 und 29 sowie 30 und 31) für die Biegelemente (32 und 33 sowie 34 und 35 bzw. 36 und 37 sowie 38 und 39) in einer oberen Wand (20) und/oder in einer unteren Wand (21) des Querträgers (13) vorgesehen sind.

7. Trägersystem nach einem der vorhergehenden Ansprüche, **dadurch gekennzeichnet, dass** die Aufnahmen (24 und 25 sowie 26 und 27 bzw. 28 und 29 sowie 30 und 31) für die Biegelemente (32 und 33 sowie 34 und 35 bzw. 36 und 37 sowie 38 und 39) eine in etwa viereckige Form in der oberen Wand (20) und der unteren Wand (21) des Querträgers (13) umfassen, in die die Biegelemente (32 und 33 sowie 34 und 35 bzw. 36 und 37 sowie 38 und 39) einführbar sind.

8. Trägersystem nach Anspruch 6 oder 7, **dadurch gekennzeichnet, dass** jede Aufnahme (z.B. 24) als Ausschnitt (56) mit einem Wandteil (57) ausgebildet ist, das um eine entfernt von einem Stützende (61) des Querträgers (13) in Fahrzeuglängsrichtung verlaufende Biegekante (63) in den Innenraum (65) des Querträgers (13) verformbar und als Rampe (64) zur Vorpositionierung (Vp) des Biegelements (32) versehen ist.

9. Trägersystem nach einem der vorhergehenden Ansprüche, **dadurch gekennzeichnet, dass** je Endbereich (z.B. 14) an der oberen Wand (20) und der unteren Wand (21) des Querschnitts jeweils zwei in Fahrzeuglängsrichtung (E-E) beabstandete und in Fahrzeugquerrichtung (A-A) verlaufende Biegelemente (32 und 33 bzw. 34 und 35) vorgesehen sind, die z.B. aus einem Stück mit dem Längsträger(16) hergestellt sind.

10. Trägersystem nach einem der vorhergehenden Ansprüche, **dadurch gekennzeichnet, dass** die Biegelemente (32 und 33 bzw. 34 und 35) durch Abwinkelungen (41 und 42) bzw. 43 und 44) eines aufrechten als Anschlag (67) an dem Stützende (61) des Querträgers (13) dienender Wandabschnitt (66) des Längsträgers (13) gebildet werden.

11. Trägersystem nach einem der vorhergehenden Ansprüche, **dadurch gekennzeichnet, dass** das oder jedes Biegelement (z. B. 32) in seiner Länge (L) betrachtet ein dem Anschlag (67) benachbarter mit Wandbereichen (WbI und WbII) des Querträgers zusammenwirkender Führungsabschnitt (Fa) und einen durch die zugehörige Aufnahme (24) hindurchführbaren Biegeabschnitt (Ba) aufweist.

12. Trägersystem nach einem der vorhergehenden Ansprüche, **dadurch gekennzeichnet, dass** am Längsträger (16) ein Biegeelement (32-39) angeordnet ist, das in eine Aufnahme (24-31) am Querträger (13) eingreift.

13. Trägersystem nach einem der vorhergehenden Ansprüche, **dadurch gekennzeichnet, dass** mindestens eine Aufnahme (24-31) eine insbesondere in der Art einer Rampe ausgestaltete Führungskontur oder Führungsschräge zur Führung des zugeordneten Biegeelements (33-39) und/oder als Biegehilfe für das zugeordnete Biegeelement (33-39) aufweist.

14. Trägersystem umfassend einen Hohlträger nach einem der vorhergehenden Ansprüche, wobei das Trägersystem einen Kupplungsarm zum Anhängen eines Anhängers und/oder eine Halterung zum Halten eines Heck-Lastenträgers umfasst und/oder dass das Verbindungssystem (19) ein am Querträger (13) befestigtes Aufnahmeelement (70) für einen Kugelhals (71) umfasst, wobei zwischen einem Tragbolzen (72) des Kugelhalses (71) und dem Aufnahmeelement (70) eine Schwalbenschwanzverbindung (74) wirksam ist.

15. Verfahren zum Verbinden der Längsträger mit dem Querträger nach einem oder mehreren der vorangehenden Ansprüche, **gekennzeichnet durch** folgende Verfahrensschritte:
- der Querträger (13) und die Längsträger (16 und 17) werden getrennt voneinander hergestellt.
- der jeweilige Längsträger (z.B. 16) wird mit den Biegelementen (32 und 33 sowie 34 und 35) in die korrespondierenden Aufnahmen (24 und 25 sowie 26 und 27) eingeführt,
- die Führungsabschnitte (Fa) richten dabei die Biegeabschnitte (Ba) an den Wandbereichen (Wb I und WbII) in der Weise aus, dass sie **durch** die Aufnahmen (24 und 25 sowie 26 und 27) bewegt und mittels den in besagten Aufnahmen vorgesehenen Rampen (64) in definiertem Umfang in eine Vorposition (Vp) verbracht werden,
- die Biegeabschnitte (Ba) werden vollständig umgebogen, dergestalt, die sie sich auf der oberen Wand (20) und der unteren Wand (21) des Querträgers (13) mit Berührungskontakt abstützen.

## Claims

1. Member system for a trailer coupling and/or a rear load carrier of a motor vehicle, in particular a passenger car, the member system comprising a crossmember represented by a tubular section, which comprises a connecting system of a trailer coupling or a rear load carrier and is, in end regions, connected to side members provided at a rear end of the motor vehicle for mounting on body sections, **characterised in that** the crossmember (13) is, adjacent to the end regions, (14 and 15) connected to the side members with the interposition of bending elements (32 and 33, 34 and 35, and 36 and 37, 38 and 39 respectively) introduced into receptacles (24 and 25, 26 and 27, and 28 and 29, 30 and 31 respectively) and brought into their end positions (E1) in one or more forming processes.

2. Member system according to claim 1, **characterised in that** at least each end region (e.g. 14) of the crossmember (13) has a quadrilateral, preferably rectangular, cross section (18), so that longer upper and lower walls (20 and 21 respectively) of the rectangular cross section (18), as viewed in the vertical direction (C-C) of the vehicle, are oriented horizontally and in the longitudinal direction (E-E) of the vehicle, while shorter upright front and rear walls (22 and 23 respectively), as viewed in the direction of travel (D), contribute to the formation of the cross-section (18).

3. Member system according to claim 1 or 2, **characterised in that** each side member (e.g.10) is made of a high-strength flat material, preferably metal, a composite or the like, a longer cross-section side (40) of the side member (16) being substantially upright.

4. Member system according to any of the preceding claims, **characterised in that** the crossmember (13) is represented by an extruded profile with an in particular rectangular cross-section.

5. Member system according to any of the preceding claims, **characterised in that** the crossmember (13) comprises supporting walls (47, 48 and 49), which, together with the horizontal and upright walls (20 and 21, 22 and 23 respectively), form chambers (50, 51 and 52, 53, 54 and 55 respectively), between the horizontal upper and lower walls (20 and 21 respectively) and the upright front and rear walls (22 and 23 respectively).

6. Member system according to any of the preceding claims, **characterised in that** the receptacles (24 and 25, 26 and 27, and 28 and 29, 30 and 31 respectively) for the bending elements (32 and 33, 34 and 35, and 36 and 37, 38 and 39 respectively) are provided in an upper wall (20) and/or in a lower wall (21) of the crossmember (13).

7. Member system according to any of the preceding claims, **characterised in that** the receptacles (24 and 25, 26 and 27, and 28 and 29, 30 and 31 respectively) for the bending elements (32 and 33, 34 and 35, and 36 and 37, 38 and 39 respectively) comprise an approximately rectangular shape in the upper wall (20) and in the lower wall (21) of the crossmember (13), into which the bending elements (32 and 33, 34 and 35, and 36 and 37, 38 and 39 respectively) can be inserted.

8. Member system according to claim 6 or 7, **characterised in that** each receptacle (e.g. 24) is designed as a cut-out (56) with a wall part (57), which can be deformed into the interior (65) of the crossmember (13) about a bending edge (63) extending in the longitudinal direction of the vehicle at a distance from a support end (61) of the crossmember (13) and which is provided as a ramp (64) for the pre-positioning (Vp) of the bending element (32).

9. Member system according to any of the preceding claims, **characterised in that** for each end region (e.g.14) two bending elements (32 and 33, 34 and 35 respectively), which are spaced the longitudinal direction (E-E) of the vehicle and extend in the transverse direction (A-A) of the vehicle and which are, for example, produced in one piece with the side member (16), are provided on the upper wall (20) and the lower wall (21) of the cross-section.

10. Member system according to any of the preceding claims, **characterised in that** the bending elements (32 and 33, 34 and 35 respectively) are represented by offsets (41 and 42, 43 and 44 respectively) of an upright wall section (66) of the side member (16) serving as a stop (67) at the support end (61) of the crossmember (13).

11. Member system according to any of the preceding claims, **characterised in that** the or each bending element (e.g. 32) comprises, as viewed along its length (L), a guide section (Fa) located adjacent to the stop (67) and acting together with wall regions (WbI and WbII) of the crossmember and a bending section (Ba) which can be passed through the associated receptacle (24).

12. Member system according to any of the preceding claims, **characterised in that** a bending element (32-39), which engages with a receptacle (24-31) on the crossmember (13), is provided on the side member (16).

13. Member system according to any of the preceding claims, **characterised in that** at least one receptacle (24-31) has a guide contour or guide bevel, which is in particular designed in the manner of a ramp, for guiding the associated bending element (32-39) and/or for acting as a bending aid for the associated bending element (32-39).

14. Member system, comprising a hollow member according to any of the preceding claims, wherein the member system comprises a coupling arm for attaching a trailer and/or a holder for holding a rear load carrier, and/or wherein the connecting system (19) comprises a reception element (70) mounted on the crossmember (13) for a ball neck (71), a dovetail joint (74) acting between a support bolt (72) of the ball neck (71) and the reception element (70).

15. Method for joining the side members to the crossmember according to one or more of the preceding claims, **characterised by** the following process steps:
- The crossmember (13) and the side members (16 and 17) are produced separately.
- The respective side member (e.g. 16) is inserted into the corresponding receptacles (24 and 25, 26 and 27) with the bending elements (32 and 33, 34 and 35).
- In this process, the guide sections (Fa) align the bending sections (Ba) to the wall regions (WbI and WbII) in such a way that they are moved through the receptacles (24 and 25, 26 and 27) and brought into a pre-position (Vp) by means of the ramps (64) provided in the said receptacles to a defined extent.
- The bending sections (Ba) are bent over completely, so that they are supported in contact with the upper wall (20) and the lower wall (21) of the crossmember (13).

## Revendications

1. Système de support pour un attelage et/ou un support de charge arrière d'un véhicule automobile, en particulier d'un véhicule personnel, le système de support comportant une traverse représentée sous la forme d'une section tubulaire, ladit traverse présentant un système de liaison d'un attelage ou d'un support de charge arrière et est reliée sur des zones d'extrémité à des longerons prévus pour le montage sur des sections de montage sur une partie arrière du véhicule automobile, **caractérisé en ce que** la traverse (13) est reliée de manière contiguë aux zones d'extrémité (14 et 15) aux longerons par l'intermédiaire d'éléments de flexion (32 et 33 ainsi que 34 et 35 ou 36 et 37 ainsi que 38 et 39) introduits dans des logements (24 et 25 ainsi que 26 et 27 ou 28 et 29 ainsi que 30 et 31) et passés par un ou plusieurs processus de déformation dans des positions finales (E1).

2. Système de support selon la revendication 1, **caractérisé en ce qu'**au moins chaque zone d'extrémité (par exemple 14) de la traverse (13) présente une section transversale (18) quadrilatérale, de préférence rectangulaire, de telle manière que, vu dans le sens vertical du véhicule (C-C), des parois supérieures et inférieures (20 ou 21) plus longues de la section transversale (18) rectangulaire soient orientées horizontalement et dans le sens longitudinal du véhicule (E-E), alors que vu dans le sens de la marche (D), des parois avant et arrière (22 ou 23) verticales plus courtes contribuent à la formation de la section transversale (18).

3. Système de support selon la revendication 1 ou 2, **caractérisé en ce que** chaque longeron (par exemple 16) est fabriqué en matériau plat très résistant, de préférence en métal, matériau composite ou similaire, un côté de section transversale (40) plus long du longeron (16) se trouvant sensiblement vertical.

4. Système de support selon l'une quelconque des revendications précédentes, **caractérisé en ce que** la traverse (13) est formée par un profilé extrudé avec une section transversale en particulier rectangulaire.

5. Système de support selon l'une quelconque des revendications précédentes, **caractérisé en ce que** la traverse (13) présente entre les parois supérieures et inférieures (20 ou 21) horizontales ainsi que les parois avant et arrière (22 ou 23) verticales des parois d'appui (47, 48 et 49) qui forment des chambres (50, 51 et 52 ou 53, 54 et 55) conjointement avec les parois (20 et 21 ou 22 et 23) horizontales et verticales.

6. Système de support selon l'une quelconque des revendications précédentes, **caractérisé en ce que** les logements (24 et 25 ainsi que 26 et 27 ou 28 et 29 ainsi que 30 et 31) pour les éléments de flexion (32 et 33 ainsi que 34 et 35 ou 36 et 37 ainsi que 38 et 39) sont prévus dans une paroi supérieure (20) et/ou dans une paroi inférieure (21) de la traverse (13).

7. Système de support selon l'une quelconque des revendications précédentes, **caractérisé en ce que** les logements (24 et 25 ainsi que 26 et 27 ou 28 et 29 ainsi que 30 et 31) pour les éléments de flexion (32 et 33 ainsi que 34 et 35 ou 36 et 37 ainsi que 38 et 39) comportent une forme à peu près quadrilatérale dans la paroi supérieure (20) et la paroi inférieure (21) de la traverse (13), dans lesquelles les éléments de flexion (32 et 33 ainsi que 34 et 35 ou 36 et 37 ainsi que 38 et 39) peuvent être introduits.

8. Système de support selon la revendication 6 ou 7, **caractérisé en ce que** chaque logement (par exemple 24) est réalisé comme une encoche (56) avec une partie de paroi (57) qui peut être déformée autour d'une arête de flexion (63) s'étendant à distance d'une extrémité d'appui (61) de la traverse (13) dans le sens longitudinal du véhicule dans l'espace intérieur (65) de la traverse (13) et est pourvu d'une rampe (64) pour le prépositionnement (Vp) de l'élément de flexion (32).

9. Système de support selon l'une quelconque des revendications précédentes, **caractérisé en ce que** respectivement deux éléments de flexion (32 et 33 ou 34 et 35) s'étendant dans le sens transversal du véhicule (A-A) et espacés dans le sens longitudinal du véhicule (E-E) sont prévus par zone d'extrémité (par exemple 14) sur la paroi supérieure (20) et la paroi inférieure (21) de la section transversale, lesquels sont fabriqués par exemple en une pièce avec le longeron (16).

10. Système de support selon l'une quelconque des revendications précédentes, **caractérisé en ce que** les éléments de flexion (32 et 33 ou 34 et 35) sont formés par des coudages (41 et 42 ou 43 et 44) d'une section de paroi (66) verticale servant de butée (67) sur l'extrémité d'appui (61) de la traverse (13) du longeron (13).

11. Système de support selon l'une quelconque des revendications précédentes, **caractérisé en ce que** le ou chaque élément de flexion (par exemple 32) présente, vu dans sa longueur (L), une section de guidage (Fa) coagissant de manière contiguë à la butée (67) avec des zones de paroi (WbI et WbII) de la traverse et une section de flexion (Ba) pouvant traverser le logement (24) afférent.

12. Système de support selon l'une quelconque des revendications précédentes, **caractérisé en ce qu'**un élément de flexion (32-39) est agencé sur le longeron (16), lequel s'engage dans un logement (24-31) sur la traverse (13).

13. Système de support selon l'une quelconque des revendications précédentes, **caractérisé en ce qu'**au moins un logement (24-31) présente un contour de guidage ou biais de guidage configuré en particulier comme une rampe pour le guidage de l'élément de flexion (33-39) associé et/ou comme aide à la flexion pour l'élément de flexion (33-39) associé.

14. Système de support comprenant un support creux selon l'une quelconque des revendications précédentes, le système de support comportant un bras d'attelage pour l'attelage d'une remorque et/ou une attache pour le maintien d'un support de charge arrière et/ou en ce que le système de liaison (19) comporte un élément de logement (70) fixé sur la traverse (13) pour un col de boule (71), une liaison en queue-d'aronde (74) étant active entre un boulon porteur (72) du col de boule (71) et l'élément de logement (70).

15. Procédé de liaison du longeron avec la traverse selon l'une ou plusieurs quelconques des revendications précédentes, **caractérisé par** des étapes de procédé suivantes :
- la traverse (13) et les longerons (16 et 17) sont fabriqués séparément les uns des autres,
- le longeron (par exemple 16) respectif est introduit avec les éléments de flexion (32 et 33 ainsi que 34 et 35) dans les logements (24 et 25 ainsi que 26 et 27) correspondants,
- les sections de guidage (Fa) orientent alors les sections de flexion (Ba) sur les zones de paroi (WbI et WbII) de telle manière qu'elles soient déplacées par les logements (24 et 25 ainsi que 26 et 27) et soient amenées à l'aide des rampes (64) prévues dans lesdits logements dans l'étendue définie dans une préposition (Vp),
- les sections de flexion (Ba) sont complètement repliées de telle manière qu'elles s'appuient avec contact sur la paroi supérieure (20) et la paroi inférieure (21) de la traverse (13).
